# EUROPEAN PATENT APPLICATION

(11) **EP 3 168 166 A1**
(43) Date of publication of application: **17.05.2017**
(21) Application number: 15807569.7
(22) Date of filing: 22.04.2015
(51) Int. Cl.: B65C 11/06, B65C 9/25

(54) **THERMAL SEALING DEVICE**

(30) Priority: 13.06.2014 ES 201430906; 04.07.2014 ES 201431012
(71) Applicant: Neutroleader S.L.U., 46860 Albaida (ES)
(72) Inventor: NÁCHER VAÑÓ, José Luís, 46860 Albaida (ES)
(74) Representative: Sanz-Bermell Martinez, Alejandro
(86) International application number: PCT/ES2015/070338
(87) International publication number: WO 2015/189446

(57) **Abstract**

The invention relates to a thermal sealing device comprising a frame (1) for supporting the various elements, a handle or grip bar (2), a roll support (3) with a roll-carrying shaft, possibly a guide (4) through which the seal passes, and a device or means for cutting (5) the seal, wherein the seal consists of a paper seal roll (6) provided with a thermal adhesive which is activated when it is subjected to the action of a heat source, the sealing device also comprising an element (7) for applying the seal and at least one arm (9) for carrying an element (7) for applying the seal in an automatic actuation embodiment, a seal-heating means being provided in both cases, which is normally arranged on the applicator element.

## Description

### Subject of the invention

This invention refers to a thermal sealing device, that is, a dispenser of sealing tape which is used for fast and effective sealing of boxes and packages, whose format, characteristics and applications mean that this improves on similar apparatus found on the market and anything forming part of the corresponding state of the art.

The thermal sealing device claimed is a device which, unlike earlier self-adhesive tape sealing apparatus, works by the application of heat when the tape is unrolled. The sealing tape is preferably made of paper, meaning that this paper tape becomes adhesive once the heat required for its application has been applied.

The new thermal sealing device is made in a dual format which means it can be activated and used manually or alternatively be used in automatic mode.

### Background of the invention and state of the art

At the present time the use of both small manual sealing machines and sealing lines in all kinds of industry and trade is very widespread. Both of these applications use self-adhesive tapes normally made of a plastic material, such as polypropylene, polyester or PVC, normally made in a brown colour or transparent, though they may also be found in self-adhesive paper; in these tapes adherence between the layers of the roll must be avoided, for example by adding coating layers, in general of a plastic material or by using anti-adhesive paraffin on the non-adhesive layer of the paper.

The convenience and practical nature of the system is sufficient. A plastic material with a large number of negative characteristics is nevertheless being used. Plastic is a contaminant product. Recycling cardboard or paper joined to a plastic material requires processing for the elimination of this material; elimination, for example by incineration of plastic waste, though it may be used for obtaining energy, furthermore generates contaminating gases, which are toxic in some cases. This makes it inadvisable to use plastic as a general rule, and particularly the sort used in packaging sealing.

There are 5 adhesive paper tapes. These tapes are nevertheless provided with a permanent adhesive of relatively low adhesiveness, not very suitable as a seal, since in the event of having any greater adhesiveness and of the adhesive being intended for sealing paper or cardboard, the actual tape would stick to itself on the roll, preventing this from being used. To prevent adhesion to the layer of paper on the previous wind, one of its sides must be provided with an anti-adherent medium, for example waxes or a plastic coating, which proves indesirable as well as being an expensive process.

Paper tapes for sealing have been used to be stuck to two parts, for example, the closing flaps of a cardboard box. This usage has been implemented with glued paper, which like former envelopes, contains an adhesive which is activated by damp, which has to be provided when the sealing operation is carried out. This type of seals involves problems due to its sealing devices being less versatile than those of plastic tape, which have finally superseded them, since they need the proper supply of water and are not advisable for certain substrates or for damp temperatures.

There are also metal-based tapes, particularly those with aluminium, which has good adhesiveness, but their price, among other factors, does not make them ideal for being used as a seal; recycling furthermore requires the separation of packaging, making the automation of processes more difficult.
In the domain of industrial property, there are certain patents which should be mentioned, for example, ES 1078394 U, which covers a continuous paper with adhesive activated by heat which constitutes precisely the technological basis of this invention, and which was developed by the same inventor as for this application. It consists of a continuous paper tape with adhesive which is activated by the provision of heat, so that this is only in a condition to stick when heat has been applied. At ambient temperature the layer that is adhesive under heat is not adhesive, simply constituting paper coated on one side with a layer which is not adhesive to touch nor by contact. This paper can be applied by means of applying direct heat, for example by an iron or similar in the sealing position. This option cannot however be applied in industry, nor does it provide safe conditions in its application, which has to take into account reliability criteria in the execution of the closure or seal of boxes or products.

The technique of applying a seal from a roll of seal of plastic material consists of a handle which holds a support for the roll or of placing the sealing roll on the roll-holder and making this run through a number of rollers up to a trapping or application roller so that its adhesive side is on the outside. This roller secures and traps the seal along its path until the horizontal end of the box ends, when it makes the cut by the incision of the blade or a saw-tooth of the cutter into the strip, later tearing the rest of the section by pulling, with a second roller fixing the rest of the seal on the vertical position of the box. That is, the sealing is done by mere application of the principle and later pulling the assembly until the slot that has to be closed is covered, with the rest of the section later being torn by a gentle pull.

The adhesive that is used on the plastic seal as well as the general adhesive of existing paper seals nevertheless deteriorates in the environment, with damp, changes in temperature, solar radiation, the passing of time, etc. and as has been said, the join is fragile, since this also deteriorates by ripping. On the other hand, thermal glues do not involve such disadvantages.

### Explanation of the invention

The invention being proposed consists of a thermal sealing device which uses paper tape provided with a thermal adhesive, that is, one that becomes adhesive from a certain temperature, the invention device providing the heat needed to give the tape the temperature required for its application. This thus requires the provision of heat to the tape to take place in such a way that this is done from the side of this tape that is not coated with thermal glue, and said provision of heat also has to be sufficient to activate the adhesive, although the paper tape is extracted at some speed.

The invention being proposed has a dual format enabling its use in a manual application or as a sealing device to be used in an automatic sealing machine.

According to one option, means have been applied to obtain the application of heat selectively, so that they only operate when the paper tape with thermal glue is extracted. In this option the activation temperature is maintained in one part of the sealing device, providing a permanent supply of heat for this purpose. In another option, when the sealing device is active (for example, held in the hand, simply switched on or in run mode, for example), a temperature close to the activation level is maintained, and this is complemented with the heat supply required when the tape is in movement.

The saw cutters used for plastic tapes ensure cutting by tearing when a single one of the saw points has cut into the plastic. It would be possible to use that sort of cutters or blades and the cutting would be done in exactly the same way. It is nevertheless also possible to use a manually or automatically activated cutting blade acting like scissors.

In the manual format, using the sealing device of the invention could result in the problem of the tape having to be cut before coming into contact with the heat source, since if this were not the case the cutting zone would be subject to the action of the adhesive means and this would reduce its action capacity until it became unusable. But the tape furthermore needs to come into immediate contact with said heat source so that it can comply with its function. Materials for the blade and adhesives in which this problem does not arise can nevertheless be used.

Hence, this invention consists of a thermal sealing device, either for manual use or for use on automatic sealing machines, which is made up of a body comprising the following elements:
- A support or frame for the following items;
- A manually-held grip or handle joined to said support, only found in the version for manual use;
- A roll-holder with a roll shaft;
- Normally a guide for letting the tape through;
- Possibly a device for feeding the tape;
- An element for applying the seal;
- A means for heating the seal, normally in the applying element;
- A means for cutting the tape.

The support or frame has an arrangement similar to the plastic, metal etc. manual or automatic tape appliers already known. In the same way, the grip or roll shaft use this essential configuration.

The roll shaft holds a roll of seal. The roll of seal is made up of a paper tape, which is impregnated on one of its sides with a thermal glue, which only becomes adhesive over a certain temperature, that is, which is activated only by heat. The roll of seal does not have any adhesion between the layers of each wind of paper before being heat-activated.

In the manual heat seal applier embodiment, the grip or handle can comprise a trigger for activating the device for feeding the tape.

In one option, the guide for the tape to pass through is made up of at least one pair of rollers between which the tape runs in the application phase, the surface of said rollers being mutually tangential.

These rollers also constitute a device for feeding the tape. At least one of said rollers will be activated by the trigger placed in the grip or handle.

The seal application element is normally formed of a freely turning roller, but can also be made up of a fixed body with a totally or partly curved surface, on which the seal can be applied during its application.

In any of its embodiments, manual or automatic, it should be understood that the applying roller, though described as such in a logical and foreseeable cylindrical arrangement, has a variable configuration in order to ensure a greater contact surface area, thus not being limiting in any way.

The heating medium for the tape will normally be placed in the application element.

The seal heating medium will normally be placed in the application element, specifically, in the automatic embodiment, an application roller, or in a skid or sliding track through which the seal goes from the roll to the application item. Automatic sealing devices tend to have a finishing roller, which presses the seal onto the box after having been applied by the application roller. According to the invention, this finishing roller can also be fitted with heating means.

The heating means is provided with a heat source. This heat source can consist of one or more of the following items:
- At least one electrical resistance;
- A gas burner;
- A source of infrared radiation;
- A conduit for the passage of air or hot gases;
- Any other type which can be applied to the system claimed.

The device according to the invention will comprise the relevant connections or conduits. In this case conduits to the hot air passage circuit or connection cables to the corresponding infrared source or resistance will be provided.

The heating medium will normally be placed inside the application element and/or in the track for the seal to pass through from the corresponding tensioning roller in the automatic embodiment.

In the manual embodiment the device of the invention is provided with one of the following elements to provide the heat needed:
- A gas tank;
- An electric battery;
- A connector for electricity supply from an external source, such as the electricity mains;
- An air or hot gas supply connector;
- A connector for gas supply from a tank or external conduit.

In each case there will obviously be conduits to the burner, to the hot air circuit, or wiring for connection to the proper resistance.

The invention also comprises a means for cutting the seal. This means for cutting the seal could be a cutting guide in the form of saw teeth or alternatively a fixed or moving blade, in this last case acting like scissors.

In the embodiment of the manual thermal sealing device, during the sealing operation, the paper runs along the hot surface, either the surface of a roller, cylindrical or with the appropriate shape to have a larger contact surface area, for example flat, or along the surface of the fixed body. The small mass of the paper, the thermal glue coating and the direct transmission of heat by contact mean that the thermal glue acquires appropriate temperature conditions to carry out its function. By resting the seal on the cardboard box (or other package that has to be sealed) the adherence between both takes place with immediate fast cooling through the effect of the large exposed surface area, the transmission of heat from the seal to the package and to the environment on its outer surface. The device for applying the seal moves along the surface area to be sealed, by extracting the required length from the roll of sealing tape as the application is performed. The whole seal is made to go along the hot surface, so that this comes into adherence condition by resting on the surface to be sealed. When the operation is completed the sealing tape is cut, either by modifying the position of the tool by a traditional means or by using a cutting blade which can be operated manually, for example by means of a trigger or button.

In the embodiment of the automatic thermal sealing device the first step is obviously to make sure that there is a sufficient stock of sealing tape in the apparatus. To start the sealing operation, the free part of the sealing device is heated and made to rest on the box, so that the adhesive which is in that zone, which has been heated up to be applied, is stuck to the front part of the box, and then the box continues its travel through the sealing zone, dragging with it the sealing tape, which slides along the hot surface, either the surface of a roller, which is cylindrical or with any shape considered suitable for the greatest contact surface area, or along the surface of the body adapted for this purpose, or both. The sealing device can also move while the box is immobile, but in any event under the effect of relative speed between the box and the seal. As occurs in the manual sealing device, the small mass of paper and thermal glue coating and the direct transmission of heat through contact of the paper with a hot surface or by passing through a hot or radiant chamber, in this case in the automatic sealing device, means that the thermal glue reaches an appropriate temperature condition to carry out its function. At this point, the automatic sealing device works like the manual sealing device, since by resting the seal on the object to be sealed adherence between both and immediately thereafter fast cooling is ensured, through the effect of the large surface area, the transmission of heat from the seal to the package and to the environment on its outer surface. The device for applying the seal moves along the surface to be sealed, the necessary length being extracted from the roll of seal as the operation is performed. The whole seal goes along the hot surface or the adapted zone, taking on adherence conditions by resting this on the surface to be sealed. After the sealing action is completed, the sealing tape is cut in the traditional way and the application roller or another roller performs the finishing action for sealing on the vertical portion.

According to one option, the usage temperature is kept constant, with the sealing device having sensors (thermostats) and regulators as required to adjust the electricity, gas etc. supply to the required conditions, or the temperature is regulated by the external source, for example in the case of using hot air or another fluid.

According to another option, the temperature is kept at a minimum threshold and only reaches the optimum temperature when a voluntary action is performed or with the movement of the roll of paper or the thermal roller, thus minimising consumption and maintaining operating conditions at all times.

The means for cutting the seal will be set between the feed device and the application element.

It is considered useful for the sealing device to have a thermal separator which prevents any accidental contact of the seal still on the roll with the heat source, that is, which prevents the temperature from being transmitted to unwanted parts of the paper, as a simple separation system in the standby mode so that the adhesive paper tape is not in contact with the heat source. In this case, the cutting means may be placed beside the thermal separator or form a single unit with said separator.

The sealing device may also comprise a tensioning roller, which forces the seal to come into contact with a larger surface area of the heating medium, such as the heating roller. In this case the tensioning roller must be repellent to thermal adhesive, as it would act on the surface area of the seal provided with thermal glue.

According to another option, one of the rollers of the seal movement guide can also be provided with heating means to put the seal at a minimum operating temperature prior to coming into contact with the heating means.

According to the invention, means for keeping the seal apart from the heating means are also designed, so that the seal can be distanced from said heating means when this is not in movement or in the operating phase.

In the manual embodiment, the means for cutting the seal will be set between the feed device and the application element, and the following items can be placed beside the device:
- A frame for supporting the different elements; a manual grip or handle joined to said support;
- A roll-holder shaft;
- A guide for the seal movement;
- A device for feeding the seal;
- An element for applying the seal;
- A means for heating the seal, normally in the application element;
- A means for cutting the seal;

### Description of the drawings

In order to illustrate the explanation which is to follow, we are enclosing with this descriptive report two sheets of drawings in which two figures represent the essence of this invention as an example thereof:
- Figure 1: Shows a schematic side view of the manual sealing device according to a first form of embodiment;
- Figure 2: Shows a schematic side view of the manual sealing device of the invention, according to a second form of embodiment.
- Figure 3: Shows a schematic side view of the sealing device according to a preferred embodiment in its automatic version.

The following reference numbers are used in these figures:
- 1: frame
- 2: handle or grip
- 3: seal roll support
- 4: guide for the seal to pass through
- 5: seal cutting device or means
- 6: roll of seal
- 7: element or roll for applying the seal
- 8: trigger for feeding the seal
- 9: thermal insulation element
- 10: button for activating the heating means
- 11: securing plate
- 12: arms holding the rollers
- 13: free end of the sealing tape
- 14: finishing roller

### Description of the preferential forms of embodiment

In Figures 1 and 2 there is a description of a manual tool for sealing (sealing device) with a paper seal provided with glue activated by heat. This sealing device comprises a frame (1) which is provided with a handle (2) for manually gripping this. The frame (1) comprises a support (3) of a seal roll (6) and cutting means (5) for the seal. The sealing device also comprises an application element (7) for the seal. This application element (7) is normally a roller or a curved skid, along whose surface area the seal slides in the sealing operation. The application element (7) is provided with a heating means, to ensure that this has acquired a temperature in the application phase high enough to transmit the heat necessary to the seal in order to activate the thermal glue which said seal is provided with.

The heating of the application element can be performed by any of the following means:
- At least one electric resistance;
- A gas burner;
- A source of infrared radiation;
- A conduit for allowing air or hot gases through.

According to a preferential form of embodiment, the heating energy of the application element comes from a rechargeable battery placed, for example, in the handle (2) of the sealing device, as usually implemented in portable electrical tools.

According to another option, the heating energy comes from a gas heater, with a gas tank placed in the sealing device, in its handle (2) for example.

In alternative embodiments, the heating energy comes from an external electrical connection, a gas supply, or by means of an external supply of hot air.

The sealing device comprises a device for feeding the seal through, which in a preferred option is mechanically operated by means of a trigger (8) placed in the handle (2). However, in alternative embodiments, this could be activated by an electric motor, for example. The feed device is integrated in the guide (4) for allowing through the seal and is preferably made up of a set of rollers between which the seal runs, trapping this, and making it move. Preferably the rollers between which the seal runs can turn in a single direction, thus constituting an anti-rollback device. In one option there could be one or more rollers which are made of a material repelling the adhesive and which are provided with heating means for pre-heating the seal.

There is a thermal insulation element (9) between the hot zone and the seal roll (6).

The sealing device also comprises a seal cutting means (5). This cutting means can be a fixed or moving knife, with a continuous or discontinuous edge, for example in the form of saw teeth. The moving blade will be capable of being manually activated by the proper activating device.

In the event of the blade being mobile, this will be placed in the cold zone furthest from the heat source of the thermal insulation element (9) or in a position close to this.

In the event of the blade being fixed, this would be placed in the final zone, after the hot roller, its location being like those on the traditional sealing devices.

In any event, the sealing device of the invention can comprise a securing plate (11), which enables applying pressure on the seal when it has already adhered, or is in the stage of adhesion to the package, for perfect securing.

The roll of paper is placed in its roll-holder support, and the end of the paper tape that constitutes the seal is partially extracted, towards the cutter. After a period of inactivity it is intended for the heating means to go into a standby stage, in which there is either no heating or a basic heat is maintained. To reactivate operation and thus heating, it is intended for the sealing device to have a switch or pushbutton (10), normally placed in the handle or grip (2), which activates or reactivates (or deactivates) the heating. The connection device can have three positions: off, constantly on, maintenance heat with reactivation under use.

In any event, this will have a thermostat for controlling the temperature of the heating means.

The application element thus acts as a support for the outgoing paper and for going over and pressing this on when required, after cutting the piece of the seal roll which is going to be used.

According to a second form of embodiment, the cutting blade is placed behind the application element and this is used in the conventional way. In this case there will not be a moving blade, and the device for guiding the seal will be located in an upper zone, so that the travel along the hot surface of the application element is greater.

Obviously all the rollers and especially the rollers for guiding the seal (4) are made of or coated with anti-adherent material.

It is also designed for the sealing device to comprise a device for keeping the seal away from the rollers, and especially from the heat roller, in the rest position.

Figure 3 describes an automatic embodiment of the thermal sealing device with a paper seal provided with thermally-activated glue. This sealing device comprises a frame (1). The frame (1) comprises a support (3) of a seal roll (6) and cutting means (5) for cutting the seal. The sealing device also comprises an application element (7) for the seal. This application element (7) is normally a roller, along whose surface area the seal slides during the sealing operation. The application element will normally be placed on a carrying arm (12). This carrying arm (12) will normally be provided with a hinged item and elastic means so that it always tends to be close to the box to be sealed, but can withdraw in the event of coming up against an obstacle, a larger-sized box or similar. The application element (7) is provided with a heating means which ensures that this has become hot enough in the application phase to transmit the amount of heat needed to the seal to activate the thermal glue which this seal is provided with.

According to one option, a pre-heating track or chamber for the seal, also provided with the heating means, is provided prior to the application element.

Just as occurs in the embodiment of the manually activated thermal sealing device, the heating of the application element and/or of the pre-heating track or chamber can be implemented by one of the following means:
- At least one electric resistance;
- A source of infrared radiation.
- A conduit for allowing air or hot gases through.

The heating energy comes from an external electrical connection, is supplied by gas or by means of an external hot air supply.

The seal path is preferably made up of a set of rollers between which the seal runs, which constitute a seal guide (4), trapping this and making it move, or of a tension roller. According to one option, there can be one or more rollers which are made of an adhesive-repellent material and provided with heating means for preheating the seal.

The sealing device further comprises a cutting means in the form of a blade or saw.

The roll of paper is placed on its roll-holder support, and the free end (13) of the paper tape constituting the seal is partly drawn out. After an idle period the heating means is intended to go into a standby or rest status in which there is no heating or the basic heat is maintained. In another option, the temperature is kept at a minimum threshold and the optimum temperature is attained only when there is a voluntary activation or movement of the roll of paper, of the thermal roller or activation of the feeding of the product that is to be sealed, thus ensuring minimised consumption, staying in operating condition at all times, as well as incorporating three modes such as the constant active ON state, going into maintenance mode after an idle period and disconnection of the heat source in the event of any lengthy inactivity.

In any event, this will have a thermostat for controlling the temperature of the heating means and, depending on several factors such as the environmental temperature, working speed, substrates on which this is to stick, the optimum working temperature can thus be ensured.

Obviously the guide, path, application or finishing rollers (14) of the sealing device could be coated with anti-adherent material.

In both embodiment versions - manual and automatic, the thermal sealing device is particularly appropriate for its application and use in commercial and industrial business requiring safe packaging of products, including transport, distribution operations, etc..

The versatility of having two versions or embodiments of this sealing device means that this is a highly functional device in both specific sealing operations, for example in the office or shop (use of the manual sealing device) and on the industrial level (automatic sealing device), able to absorb the sealing of a considerable volume of boxes or similar. The manual sealing device's ability to adapt to boxes with a range of volumes and sizes is also considerable, thanks to the action of its adjustable carrying arm.

Of course the frame of the automatic sealing device can also vary and have its format adapted to be fitted on specific support points, to be integrated for example, in a production line or directly to be the main part of a new sealing line.

It is not considered necessary to make this description any longer for any expert in the field to understand the scope of the invention and the advantages meant by this. The materials, shape, size and arrangement of the different parts may be altered on condition that this does not entail any alteration to the essential nature of the invention. The terms in which this report has been drawn up must always be taken in a broad and non-limiting sense.

## Claims

1. A thermal sealing device, which comprises:
• A frame (1) for supporting the different elements;
• a handle or grip (2);
• a roll support (3), with a roll-holder shaft,
• possibly a guide (4) for the seal to pass through
• a device or cutting means (5) for the seal
In which the seal consists of a paper seal roll (6) provided with a thermal adhesive, which is activated when this is subjected to the action of a heat source, **characterised in that** this further comprises an application element (7) of the seal and at least one carrying arm (9) of an application element (7) of the seal in an automatic activation embodiment, comprising in both cases a means for heating the seal, normally placed in the application element.

2. The thermal sealing device according to claim 1, **characterised in that** the means for heating the seal is provided with a heat source.

3. The thermal sealing device according to claim 2, **characterised in that** the heat source of the heating means is at least one electric resistance.

4. The thermal sealing device according to claim 2, **characterised in that** the heat source of the heating means is a gas burner.

5. The thermal sealing device according to claim 2, **characterised in that** the heat source of the heating means is a source of infrared radiation.

6. The thermal sealing device according to claim 2, **characterised in that** the heat source of the heating means is a conduit for allowing through air or hot gases.

7. The thermal sealing device according to claim 2, **characterised in that** this comprises, in its manual embodiment, one of the following elements:
• An electric battery;
• A connector for electrical supply from an external source, such as the electricity mains;
• A gas tank;
• A connector for a gas supply from a tank or external conduit;
• A connector for a supply of air or hot gases.

8. The thermal sealing device according to claim 1, **characterised in that** in its manual embodiment it further comprises a device for feeding the seal through.

9. The thermal sealing device according to claim 8, **characterised in that** in its manual embodiment the device for feeding the seal through is activated by a trigger (8) placed in the handle or grip (2).

10. The thermal sealing device according to claim 1, **characterised in that** in its manual embodiment the heating means of the seal is activated by means of a switch or pushbutton (10) placed in the handle or grip (2).

11. The thermal sealing device according to any of claims 1 to 10, **characterised in that** in its manual embodiment this comprises a thermal insulation element (9) between the heat source and the seal roll (6).

12. The thermal sealing device according to claim 1, **characterised in that** the device for cutting the seal is made up of a fixed cutting edge, either continuous or in the form of saw teeth.

13. The thermal sealing device according to claim 1, **characterised in that** in its manual embodiment the device for cutting the seal consists of a manually operated moving blade (5).

14. The thermal sealing device according to claims 11 and 13, **characterised in that** in its manual embodiment the moving blade (5) is placed in the cold zone furthest from the heat source of the thermal insulation element (9) or in a position close to this.

15. The thermal sealing device according to claim 1, **characterised in that** the guide (4) for the seal to pass through is made up of a set of rollers between which the seal runs.

16. The thermal sealing device according to claim 15, **characterised in that** the rollers between which the seal runs can rotate in a single direction as an anti-rollback means.

17. The thermal sealing device according to claim 15, **characterised in that** at least one of the rollers is made of an adhesive-repellent material and is provided with heating means, in the form of a thermal roller.

18. A thermal sealing device according to any of claims 1 to 7, **characterised in that** this comprises at least one thermostat for controlling the temperature of the heating means.

19. A thermal sealing device according to any of claims 15 to 17, **characterised in that** in its manual embodiment this comprises a device for keeping the seal away from the rollers, and especially from the thermal roller, in the rest position.

20. The thermal sealing device according to claim 1, **characterised in that** in its automatic embodiment, this also comprises one of the following items:
• A connection for electricity supply from an external source, such as the electricity mains;
• A connection for supply of air or hot gases.

21. The thermal sealing device according to claim 15, **characterised in that**, in its automatic embodiment, this comprises a second, finishing roller which is provided with heating means.

22. The thermal sealing device according to claim 1, **characterised in that** in its automatic embodiment, this also comprises means for separating the heating means and the thermal seal.

23. The thermal sealing device according to claim 1, **characterised in that**, in its automatic embodiment the carrying arm (9) of the application element (7) is hinged and provided with elastic means.
